# EUROPEAN PATENT APPLICATION

(11) **EP 1 652 632 A1**
(43) Date of publication of application: **03.05.2006**
(21) Application number: 05023348.5
(22) Date of filing: 26.10.2005
(51) Int. Cl.: B25F 5/00, B23B 45/00

(54) **Removable chuck with extended retainer ring**

(30) Priority: 26.10.2004 US 973194
(71) Applicant: Black & Decker Inc., Newark, Delaware 19711 (US)
(72) Inventor: Cooper, Vincent P, Baltimore Maryland 21209 (US)
(74) Representative: Clark, Charles Robert

(57) **Abstract**

A removable chuck for a drill has a drill bit receiving portion, including a mechanism to receive the drill bit. The drill bit receiving mechanism has an inner member and an outer member (36) rotatable about the inner sleeve to tighten a drill bit into the receiving mechanism. The outer member has a desired length to enable gripping by a substantial portion of a user's hand. A shaft retention mechanism includes a housing directly coupled with the inner member. The housing has an outer surface (34) with the desired length and gripping surface to enable gripping by the user. This gripping surface enables a user to provide a counter force on the housing when a drill bit is tightened in the drill receiving mechanism.

## Description

The present invention relates to power tools and. more particularly, to removable chucks for drills.

Various types of removable chucks for drills exist in the prior art. U.S. Patent Nos. 6,551,037, 6.550.786, 6,079,716, 5,951,026, 6,239,559, 6,047,971, all assigned to the assignee of the present invention disclose various types of removable chucks. These removable chucks work satisfactory for their intended purpose. However, designers strive to improve the art.

The present invention provides the art with a removable chuck which includes a drill bit chucking member which has an extended sleeve. The extended sleeve provides a substantial area to enable the user to torque down a bit within the chuck. The present invention provides a removable adaptor which includes a gripping surface. The gripping surface enables the user to grip the adaptor to provide a counter force when the extended sleeve is being torqued down to secure a bit. The present invention negates the need for an internal spindle lock on the power tool.

It is an aspect of the invention to have a removable chuck which comprises a drill bit receiving member which includes a mechanism to receive a drill bit. The drill bit receiving member has an inner sleeve and an outer sleeve. The outer sleeve is rotatable about the inner sleeve to tighten a drill bit in the receiving member. The outer sleeve has a desired length to provide a gripping surface which enables the surface to be gripped by a substantial portion of a user's hand. A mechanism to retain the chuck on a shaft of a power tool is coupled with the receiving member. The retaining mechanism includes a housing and a shaft retention mechanism within the housing. The housing is directly coupled with the inner sleeve of the tool bit receiving member. The housing has an outer surface with a desired length and a gripping member. The gripping member enables a user to provide a counter force on the housing when a drill bit is tightened in the drill bit receiving mechanism. The outer sleeve includes a gripping member on its outer surface which is substantially similar to the gripping member on the housing. The outer sleeve has a length which enables gripping by a user's index, middle and ring finger, as well as the user's thumb.

According to another aspect of the invention, a power tool comprises a housing with a motor within the housing. An output, with a shaft, is coupled with the motor. A power source is coupled with the motor. An activation member is coupled with the motor and power source for activating and deactivating the motor which, in turn, drives the output shaft. A removable chuck is coupled with the shaft. The removable chuck includes a drill bit receiving member which includes a mechanism to receive a drill bit. The drill bit receiving member has an inner sleeve and an outer sleeve. The outer sleeve is rotatable about the inner sleeve to tighten a drill bit in the receiving member. The outer sleeve has a desired length to provide a gripping surface which enables the surface to be gripped by a substantial portion of a user's hand. A mechanism to retain the chuck on a shaft of a power tool is coupled with the receiving member. The retaining mechanism includes a housing and a shaft retention mechanism within the housing. The housing is directly coupled with the inner sleeve of the tool bit receiving member. The housing has an outer surface with a desired length and a gripping member. The gripping member enables a user to provide a counter force on the housing when a drill bit is tightened in the drill bit receiving mechanism. The outer sleeve includes a gripping member on its outer surface which is substantially similar to the gripping member on the housing. The outer sleeve has a length which enables gripping by a user's index, middle and ring finger, as well as the user's thumb.

From the following detailed description taken in conjunction with the subjoined drawings and accompanying claims, other objects and advantages will become apparent to those skilled in the art.
Figure 1 is an elevation view of a power tool including a removable chuck in accordance with the present invention.

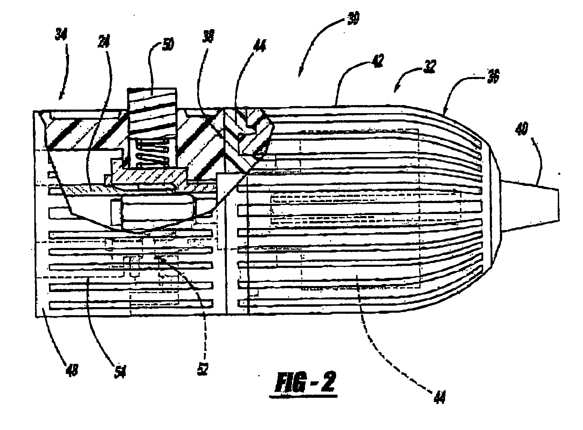

Figure 2 is an enlarged perspective view partially in section of the removable chuck in Figure 1.

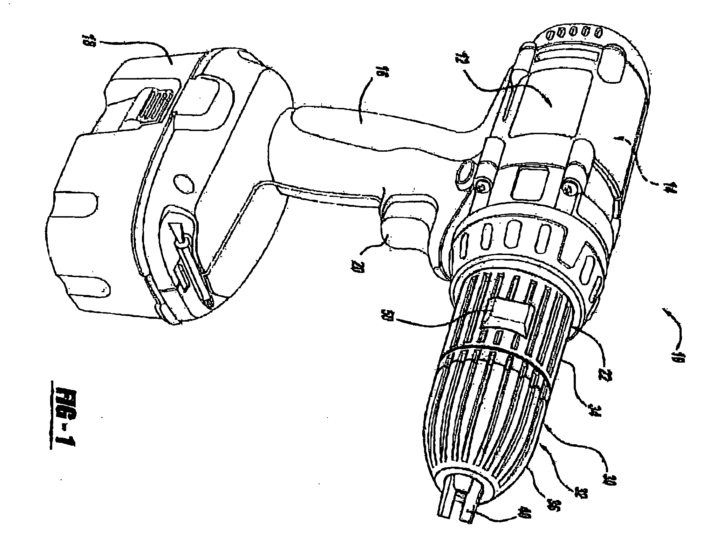

Tuming to Figure 1, a power tool is illustrated and designated with the reference numeral 10. The power tool 10 is illustrated as a drill. The power tool 10 includes a clamshell housing 12 which surrounds a motor 14. The housing 12 includes a handle 16 which includes a power source 18 coupled with the handle. The power source 18 is shown as a battery, however, an AC cord could be used. An activation member 20 is electrically coupled with the motor 14 and power source 18. The activation member 20 energizes and de-energizes the motor 14. The motor 14 is coupled with an outlet 22 which includes a shaft 24. The shaft 24 is coupled with a removable chuck 30. Upon activation of the activating member 20, the motor drives the output which, in turn, drives the shaft 24 which rotates the removable chuck 30.

The removable chuck 30 includes a bit retaining portion 32 and a shaft retention portion 34. The bit retaining portion 32 indudes an outer member 36, an inner member 38 and jaws 40.

The outer member 36 is rotatably connected to the inner member 38 by conventional means. The outer member 36 has an extended sleeve 42 which provides an enlarged gripping surface. The sleeve 42 includes gripping members 44 which may include elongated raised and lowered portions which enable a user to grip the sleeve 42. The sleeve 42 has a desired length such that it can be gripped by a substantial portion of the user's hand. Ordinarily, the sleeve 42 has a length such that the user can position his index, middle and ring finger onto the sleeve. Also, the thumb would wrap around the bottom of the sleeve as illustrated in phantom. Thus, the sleeve 42 has a significant surface area which enables the user to apply a significant amount of torque onto the sleeve 42 which, in turn, securely fastens the drill bit into the drill bit receiving mechanism 32, via the damping of the jaws 40.

The jaws 40 and inner member 38 are like those known in the art. Likewise, the inner surface of the outer sleeve 42 includes threads for moving the jaws 40 which is conventional in the art.

A rear sleeve 46 is coupled with the shaft retention portion 34. The rear sleeve 46 is secured to an inner sleeve of the shaft retention portion 34. Also, the rear sleeve 46 could be fixed to the housing 48. The rear sleeve 46 enables the bit retaining portion 32 to be rotated with respect to the rear sleeve 46. With the rear sleeve 46 being attached to the shaft retention portion, the bit retaining portion 32 can be gripped and rotated in one direction while the shaft retaining portion 34, with the rear sleeve 46, can be rotated in the other direction eliminating the need for a spindle lock. Also, the rear sleeve 46 includes an outer annular wall 47 and an inner annular wall 49. The outer annular wall 47 provides a continuous appearance with the bit retaining portion outer member 36. The inner annular wall 49 enables the sleeve to be secured with an inner sleeve of the shaft retention portion 34. The outer surface of the outer annular wall 47 may include a gripping surface like that of the outer member 36.

The shaft retention portion 34 includes a housing 48, an activation member 50 and a securement mechanism 52. The housing 48 includes a gripping surface 54. The gripping surface 54 has elongated raised and lower portions and is substantially identical to the gripping portion of the outer sleeve 42. This provides an aesthetically pleasing appearance to the removable chuck. Also, the gripping surface 54 on the housing 48 enables a user to apply a counter force on the removable chuck 30 when the outer member 34 is being turned to torque down a drill bit in the jaws 40. The counter force supplied by the gripping surface 54, enables the power tool to eliminate the need for an internal spindle lock in the tool. Thus, by having the gripping surface 54 on the housing 48, a spindle lock feature of the tool can be eliminated.

The activation member 50 and shaft retention member 52 are like those shown in U.S. Patent Nos. 6,551,037, 6,550,786, 6,079,716, 5,951,026, 6,239,559, 6,047,971 the specification and drawings of which are herein expressly incorporated by reference. The retention member 52 secures with the shaft 24 to rotate the removable chuck 30 with the output of the drill 10. Activation member 50 enables the removable chuck 30 to be released from the shaft 24.

Accordingly, the removable chuck 30 provides front 44 and rear 54 gripping surfaces. The removable chuck 30 enables the bit retaining portion 32 to provide the majority of the front grip while the shaft retention portion 34 provides a majority of the rear counter grip. This provides a significant gripping surface on each portion which enables the user to exert additional force to tighten down drill bits more effectively in the chuck.

While the above detailed description is subjected to alteration, modification and variation, those skilled in the art should recognize that such modifications are within the scope and spirit of the present invention.

## Claims

1. A removable chuck comprising:
a drill bit receiving member including a mechanism for receiving a drill bit, said drill bit receiving member having an inner member and an outer member rotatable about said inner member for tightening a drill bit in said receiving mechanism, said outer member having a desired length enabling gripping by a substantial portion of a user's hand;
a mechanism for retaining said chuck on a shaft of a power tool, said mechanism including a member and a shaft retention mechanism, said member directly coupled with said inner member, said member having an outer surface with a desired length and a gripping member enabling gripping by the user enabling the user to provide a counter force on said member when tightening a drill bit in said rill bit receiving mechanism.

2. The removable chuck according to Claim 1, wherein said outer member includes a gripping member on its outer surface.

3. The removable chuck according to Claim 2, wherein said outer member gripping member and said housing gripping member have a similar appearance..

4. The removable chuck according to Claim 1, wherein said outer member has a sleeve with a length enabling gripping by index, middle and ring fingers, as well as a thumb of the user.

5. A power tool comprising:
a housing;
a motor within said housing;
an output coupled with said motor, said output including a shaft;
a power source;
an activation member coupled with said motor and power source for activating and deactivating said motor such that when said motor is activated, said motor drives said output and shaft; and
a removable chuck coupled with said shaft, said removable chuck including:
a drill bit receiving member including a mechanism for receiving a drill bit, said drill bit receiving member having an inner member and an outer member rotatable about said inner member for tightening a drill bit in said receiving member. said outer member having a desired length enabling gripping by a substantive portion of a user's hand;
a mechanism for retaining said removable chuck on said shaft of said power tool, said mechanism including a housing, a sleeve, and a shaft retention mechanism within said housing, said housing and sleeve coupled with said inner member, said housing having an outer surface with a desired length and a gripping member enabling gripping by the user enabling the user to provide a counter force on said housing when tightening a drill bit in said rill bit receiving member.

6. The power tool according to Claim 5, wherein said outer member includes a gripping member on its outer surface.

7. The power tool according to Claim 6, wherein said outer member gripping member and said housing gripping member have a similar appearance.

8. The power tool according to Claim 5, wherein said outer member has a sleeve length with a length enabling gripping by index, middle and ring fingers, as well as a thumb of the user.
